# EUROPEAN PATENT SPECIFICATION

(11) **EP 0 421 818 B1**
(45) Date of publication and mention of the grant of the patent: **13.11.1996**
(21) Application number: 90310955.1
(22) Date of filing: 05.10.1990
(51) Int. Cl.: G06F 3/023, G06F 3/033

(54) **Interactive computer graphics system for making precise drawings**
Interaktives grafisches Rechnersystem um deutliche Zeichnungen zu machen
Système graphique interactif commandé par ordinateur pour faire des dessins précis

(30) Priority: 06.10.1989 US 417521
(43) Date of publication of application: 10.04.1991
(73) Proprietor: XEROX CORPORATION, Rochester New York 14644 (US)
(72) Inventor: Mallgren, William R., Portola Valley, CA 94028 (US); Donaldson, Janaia M., Portola Valley, CA 94028 (US)
(74) Representative: Johnson, Reginald George

(56) References cited:
- EP-A- 0 203 324
- COMPUTER GRAPHICS, PROC. SIGGRAPH '86 vol. 20, no. 4, 18 August 1986, DALLAS, US pages 233 - 240; E.A. BIER ET AL.: 'Snap-dragging'
- WORKSHOP ON INTERACTIVE 3D GRAPHICS 23 October 1986, CHAPEL HILL, US pages 175 - 182; G.M. NIELSON ET AL.: 'Direct manipulation techniques for 3D objects using 2D locator devices'

## Description

This invention relates generally to interactive computer-aided illustration systems for making precise drawings of user-specified objects. Specifically, it relates to a system for emulating the graphic primitives or drawing tools employed by draftsmen to create such drawings in various two-dimensional and three-dimensional geometries.

When creating technical illustrations by hand, graphic artists have traditionally relied upon standard drawing tools such as a compass, ruler, technical pen, french curve, and transfer screen. However, this system in inefficient and tedious for complex illustrations, especially when an artist is creating three-dimensional views of objects on two-dimentional display systems.

Computer-aided illustration systems have automated these tasks. These systems represent each element (lines, shapes, letter forms) as an independent object with its own attributes. In such a system, instead of creating an entire line by drawing continuously, as one would do by hand, the user plots only those points necessary to define the line. For example, the user places "anchor" and "control" points with a pointing device (such as a "mouse"). Next, the computer generates the object specified by these points. The real power of such object-based systems lies in their ability to rapidly create precise geometric images and to manipulate an image by maneuvering its control points.

Typically, computer-aided illustration systems provide the artist with a set of simple drawing tools or graphic primitives from which he or she may generate more complicated constructs. The geometric relation between the individual elements in a drawing may be critical, yet an artist's hand can rarely achieve the mathematical precision of a computer-based illustration system. Thus special cursor-positioning techniques were developed.

For example, Sutherland describes a positioning techniques based upon the use of a light pen (Sutherland, Sketchpad: A Man-machine Graphical Communication System, Preceedings -- Spring Joint Computer Conference, 1963). In that implementation, a user aims a light pen at a picture part. The exact location of the light pen is ignored in favor of a "pseudo pen location" which is exactly on the part aimed at. If no object is aimed at, the pseudo pen location and actual pen location are identical. Thus this system compensates for the user's imprecise cursor placement by locking onto a point on the existing drawing.

Sutherland also describes a system of constraint satisfaction. Here a user is able to specify to the system mathematical conditions on previously drawn parts, which are automatically satisfied by the computer to make the drawing take the exact shape desired. In other words, a constraint is a rule that the input coordinates must obey.

There are several different types of constraint systems based on the solution of simultaneous equations. See, for example, Newman, Principles of Interactive Computer Graphics, McGraw-Hall, 1979. A common constraint is the "modular constraint" which forces the input point to lie on a stationary grid. In linear geometry, for example, the system displays a two-dimensional array of grid dots at user-specified intervals. Control points placed by the user are mapped to the nearest grid point. Thus, the grid guides the artist in the placement of control points. In contrast to this "fully constrained" grid, one may use a "partially constrained" grid. For example, a linear grid may be partially constrained either horizontally or vertically. In such a system, control points are confined to lie on grids which are either horizontal or vertical lines. Regardless of the type, grids are characteristically easy to implement and learn. Nevertheless, the grid system only provides a limited degree of the exactness required for precision drawings. Additional constraints must usually be superimposed on such systems.

"Directional constraints" force input points to lie on either user-specified lines. For example if a system is horizontally constrained, only horizontal lines may be drawn. While constraint-oriented systems have the power to achieve many different types of precision, still further types of drawing aids have been developed for use in lieu of, or in addition to, constraints.

Bier discloses "gravity-active" points and "alignment objects." See, Bier, Snap-Dragging, SIGGRAPH '86 Proceedings, Vol. 20, No. 4, August 18-22, 1986, 233-240. Bier's concept, as embodied in the Gargoyle system, made use of a "caret." While the cursor always moves with the mouse, the caret "snaps" to gravity-active points. Control points are placed at the position of the caret.

Gargoyle included gravity at object edges and at intersections of objects. Object edge gravity provides snap along the outline of an object. Intersection gravity occurs at the intersections of object lines or outlines.

Alignment objects are visible construction aids that emulate the draftsman's tools, such as a ruler and compass. The user requests the construction of alignment objects in two steps. First, the user identifies those vertices and segments in the scene at which the alignment lines should be constructed; these are now "hot". Next the user specifies a drawing command, for example, lines. Gargoyle combines the vertices and segments made "hot" with others suggested by heuristics. The resulting vertices and segments are called "triggers" which may trigger the construction of alignment objects.

While grid and constraint systems have been recently implemented in non-linear angular geometry, present systems are still of limited usefulness for drawing two-dimentional views of three dimensional objects.

For example, Xerox Pro Illustrator (version 2.0) provides a limited moving grid for linear and angular geometries. The linear grid has one horizontal axis and one vertical axis. The angular grid is a polar grid with axes at evenly spaced fixed angles. In either grid, the origin lies at the last control point placed by the user. The next control point is constrained to lie on a grid axis. The control points may be further constrained to fixed intervals on the axes.

Directional constraints are used in the Xerox Pro Illustrator (version 2.0), as in other systems, to further constrain or confine the drawing area. The system can be "horizontally constrained," so that a control point may only be placed if it is horizontally aligned with the prior control point, regardless of where the hardware cursor is located. Similarly, a vertically constrained control point would necessarily be vertically aligned with the preceding control point.

In Xerox Pro Illustrator (version 2.0) gravity is limited to control points. Control point gravity enables one to lock on to an object's control points. An ellipse, for example has nine control points.

The limited moving grids, gravity, and directional constraints of Xerox Pro Illustrator (version 2.0) are useful for linear and angular geometries, but these tools are still not ideal for drawing common two-dimensional representations of three-dimensional objects, such as paraline and perspective projections.

This invention provides a method of creating and editing illustrations using a computer-aided drawing system having a display and a cursor-control means for positioning a cursor on the display, the method comprising: creating a line on the display, the line defining a lock angle with a reference line; constraining a control point to lie at a position on the lock angle nearest the cursor; and extending the line in one direction by using the cursor-control means to select a new end point of the line at the position on the lock angle specified by the control point.

The invention further comprises displaying on said display at least one object; setting a hit radius equal to a particular distance from the cursor; and if said at least one object intersects the lock angle within the hit radius of the cursor, constraining the control point to lie at the intersection.

In another aspect of the present invention, there is provided a computer-aided drawing system comprising: a computer having a memory and a processor; a display coupled to the computer; a cursor-control means coupled to the computer for moving a cursor on the display device; means for creating a lineon the display, the line defining a lock angle with a reference line; means for constraining a control point to lie at a position on the lock angle nearest the cursor; and means for extending the line in one direction by using the cursor-control means to select a new end point of the line at the position on the lock angle specified by the control point.

By way of example, systems and methods in accordance with the invention will now be described with reference to the accompanying drawings, in which:

Fig. 1 is a simplified functional block diagram of a computer system in which the present invention may be embodied.

Figs. 2A-F demonstrate the different types of grids that are available in the system; Figs. 2A and 2C are stationary grids, while Figs. 2B, 2D, 2E, and 2F are moving grids.

Figs. 3A, 3B, and 3C demonstrate the three different types of perspective geometry.

Figs. 3D and 3E illustrate how the axes and oblique perspective geometry change when the hardware cursor is moved to a new position.

Figs. 4A-4l indicate the utility of a moving grid for constructing a square and paraline geometry.

Figs. 5A, 5B, and 5C illustrate the different types of gravity: object edge gravity, intersection gravity, and control point gravity.

Fig. 6 illustrates the principle of gravity highlighting by showing the difference between intersection and object edge gravity.

Figs. 7A, 7B, and 7C illustrate the use of control point gravity to align two objects in a move transformation.

Figs. 7D and 7E illustrate how two objects may be aligned by their centers using control point gravity.

Figs. 8A and 8B demonstrate horizontal and vertical constraints respectively, while Fig. 8C illustrates the use of lock angle.

Figs. 9A-9I illustrate how lock angle constraint is used to create different geometric objects.

Figs. 10A-10C illustrate how gravity is used to establish a lock angle.

Figs 11A and 11B show how a lock angle is derived using geometry.

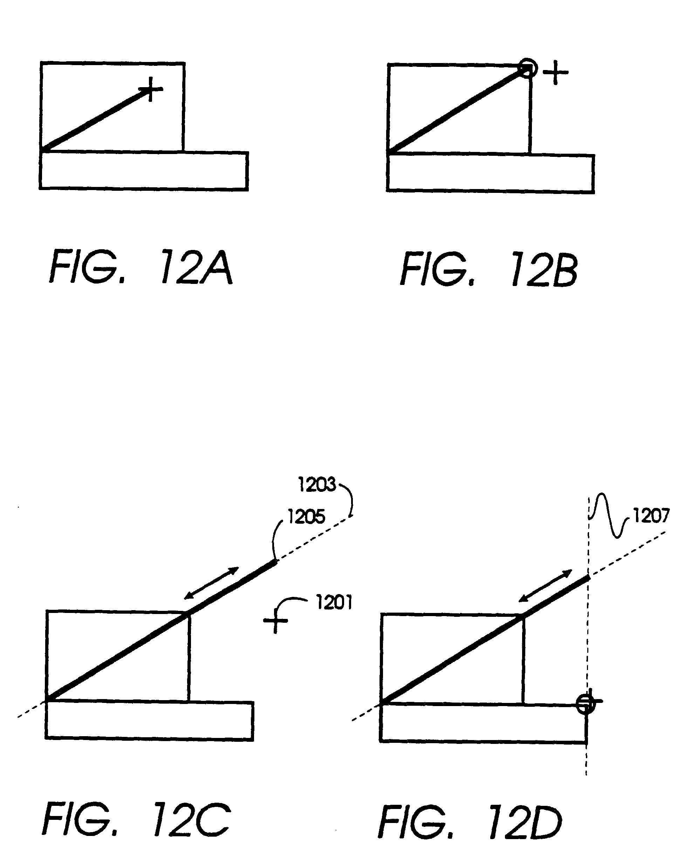

Figs. 12A, 12B, 12C, and 12D illustrate the use of vertical alignment with a lock angle.

Fig. 13A illustrates the gravity points from an intersection of an object with a grid line.

Fig. 13B shows a practical use of gravity from the intersection of a grid line and an object.

Fig. 14 illustrates that the intersection of a lock angle with an object has gravity which is greater than object edge gravity alone.

Fig. 15A and 15B demonstrate the crosshairs and perspective geometry.

Figs 15C and 15D illustrate the use of linear drawing tools in a projection plane.

Figs. 15E, 15F, and 15G demonstrate a stretch transformation in a projection plane while the system is vertically constrained.

Fig 15H, 15I, and 15J demonstrate the use of alignment and perspective geometry.

Fig. 16 illustrates the construction of a complex object using isometric ellipses.

Fig. 17 illustrates basic program modules of the system shown in Fig. 1.

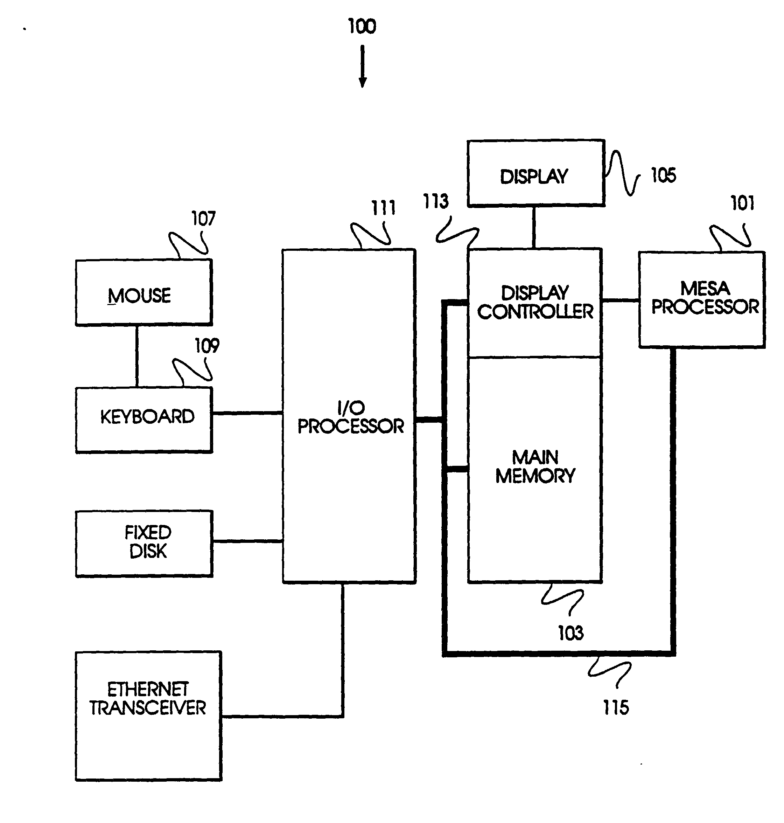

The invention may be embodied on a computer system such as the system 100 of Fig. 1, which comprises a central processing unit (CPU) 101, a system memory 103, an output device 105 and input devices 107, 109, with respective controllers 111, 113. The various components communicate through a system bus 115 or similar architecture. The user can use a keyboard 109 and/or a pointing device 107 to enter commands, while the computer communicates the result through display device 105, such as a cathode-ray tube or a printer. In the preferred embodiment, an appropriately programmed Xerox 6085 workstation is used.

In this interactive computer graphics system, the user "draws" on the display monitor 105 with pointing device 107. The system emulates the set of tools which are typically available to the traditional graphics artist, such as a ruler and a compass. Geometric objects have precise mathematical definitions, and thus may be represented in the computer's memory. To draw a line, an artist need only specify two of its points. Likewise, to draw a circle, one need only specify its center and radius. Alternatively, one could specify any three points on the circle, or specify the center and one point on the circle. The ability of the the system to precisely represent the various geometric images and their relationships, provides even the non-artist with the ability to create complex illustrations.

The system provides the user with a choice among several geometric modes. A geometric mode is an underlying state the system is in, providing a consistent geometric orientation for drawing and editing. Grids are provided to represent a particular geometry and to provide a set of geometric constraint, i.e. angles and distances for the specified geometry. The four basic geometries are: linear, angular, paraline, and perspective.

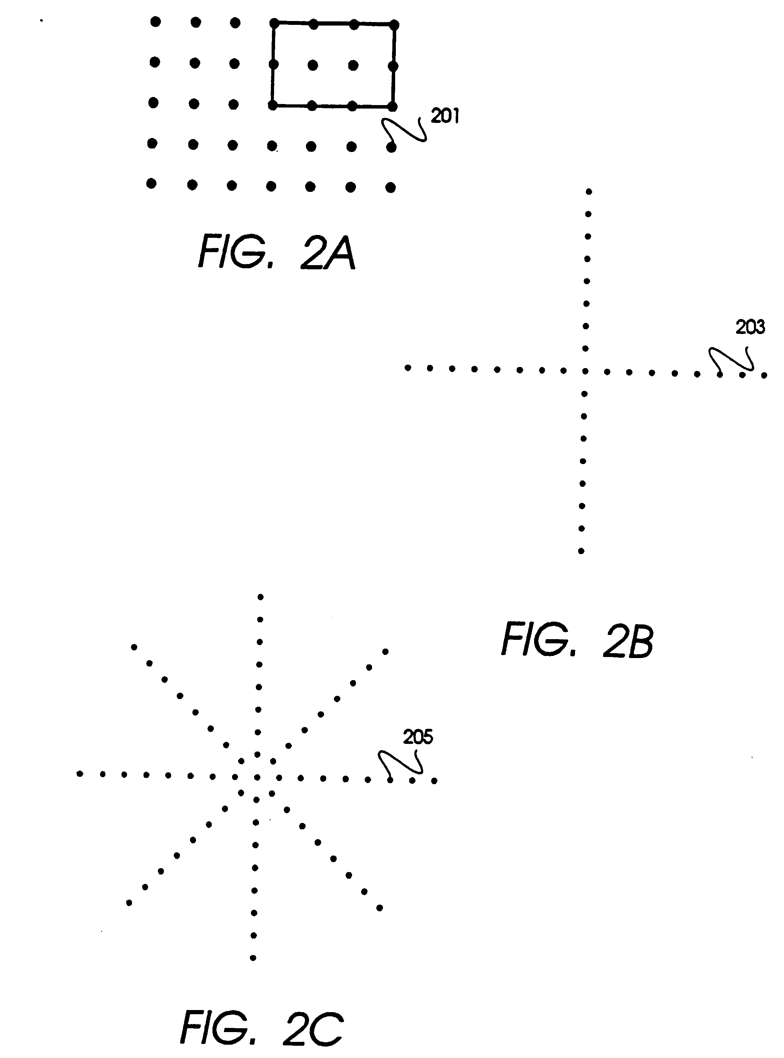

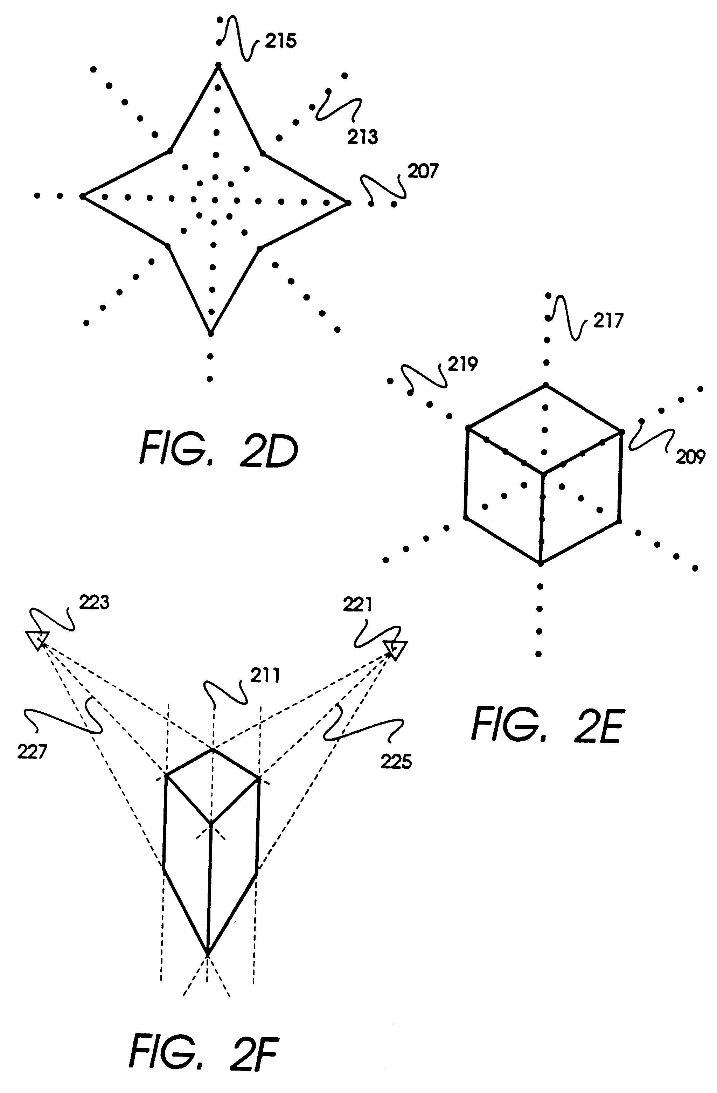

In the preferred embodiment, the system provides a choice among two stationary grids 201, 205 seen in Figs. 2A and 2C. The system also provides four different moving grids, seen in Figs. 2B, 2D, 2E, and 2F: linear 203, angular 207, paraline 209, and perspective 211. The linear grid 203 in Fig. 2B is the familiar cartesian coordinate system. The angular grid in Fig. 2D has a plurality of evenly spaced axes 207, 213, 215 whose angles are specified by the user. The paraline grid in Fig. 2E is defined by three axes 209, 217, 219 whose user-specified angles are not necessarily equal. Advantageously, these angles may correspond to the standard paraline projection angles (isometric, cabinet, military, etc.).

The perspective geometry has three angles which converge to either one, two, or three vanishing points. Depending on the number of vanishing points, the perspective geometry has 0-2 fixed angles and 1-3 constantly changing angles which converge to the vanishing points. Fig. 2F illustrates two vanishing points 221, 223, with one fixed vertical axis 211 and two changing angles 225, 227.

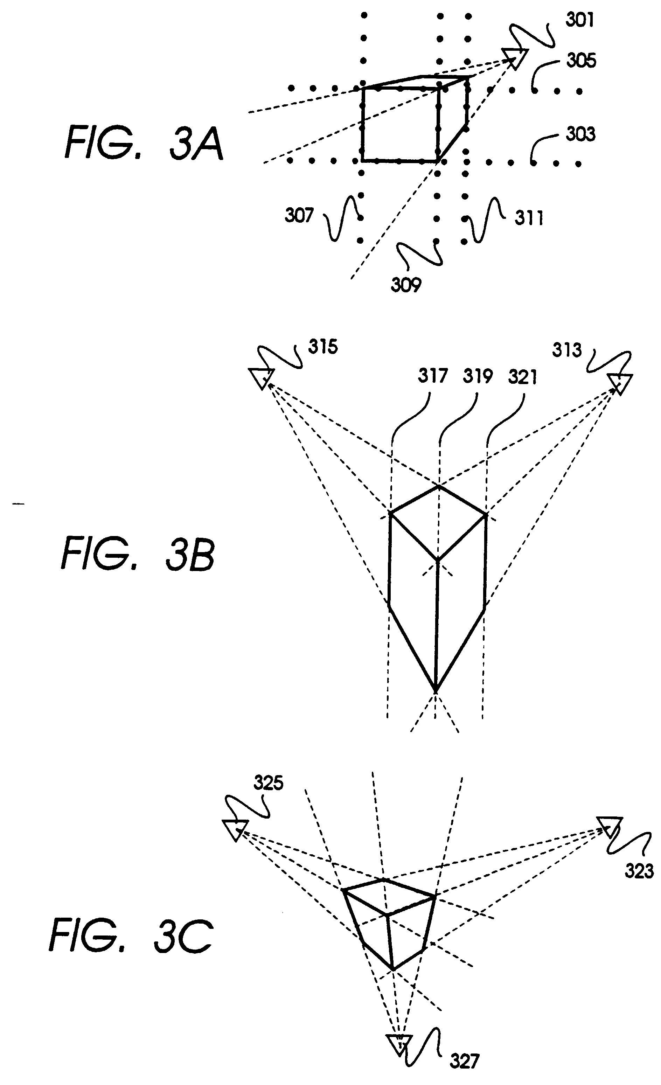

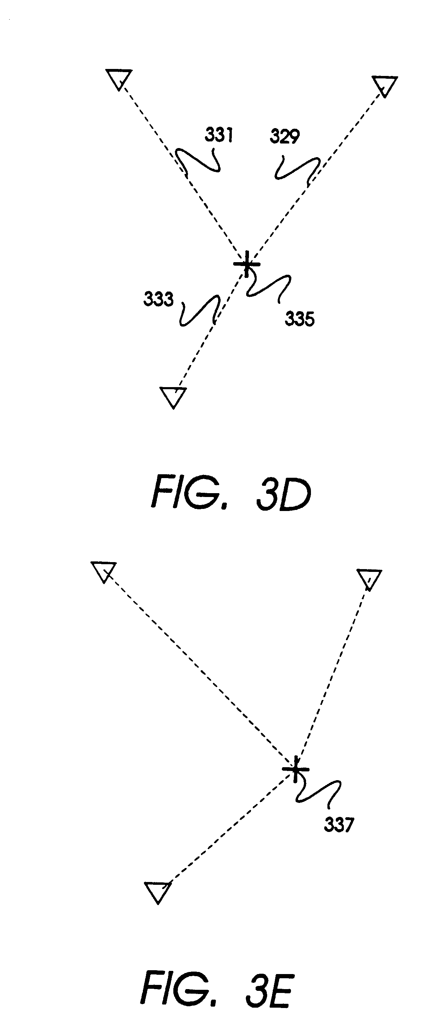

Referring to Fig. 3A-C, objects drawn in the perspective geometry are shown in parallel (Fig. 3A), angular (Fig. 3B), and oblique perspectives (Fig. 3C). In parallel perspective (Fig. 3A), there is one vanishing point 301, and the horizontal lines 303, 305 and vertical lines 307, 309, 311 remain parallel. In angular perspective geometry (Fig. 3B) there are two vanishing points 313, 315, and the vertical lines 317, 319, 321 remain parallel. In oblique perspective geometry (Fig. 3C) there are three vanishing points 323, 325, 327 and no parallel lines. Figs. 3D and 3E illustrate how the grid axes 329, 331, 333 change in an oblique perspective geometry as the cursor 335 moves to a new location 337. There is a unique set of angles for each location.

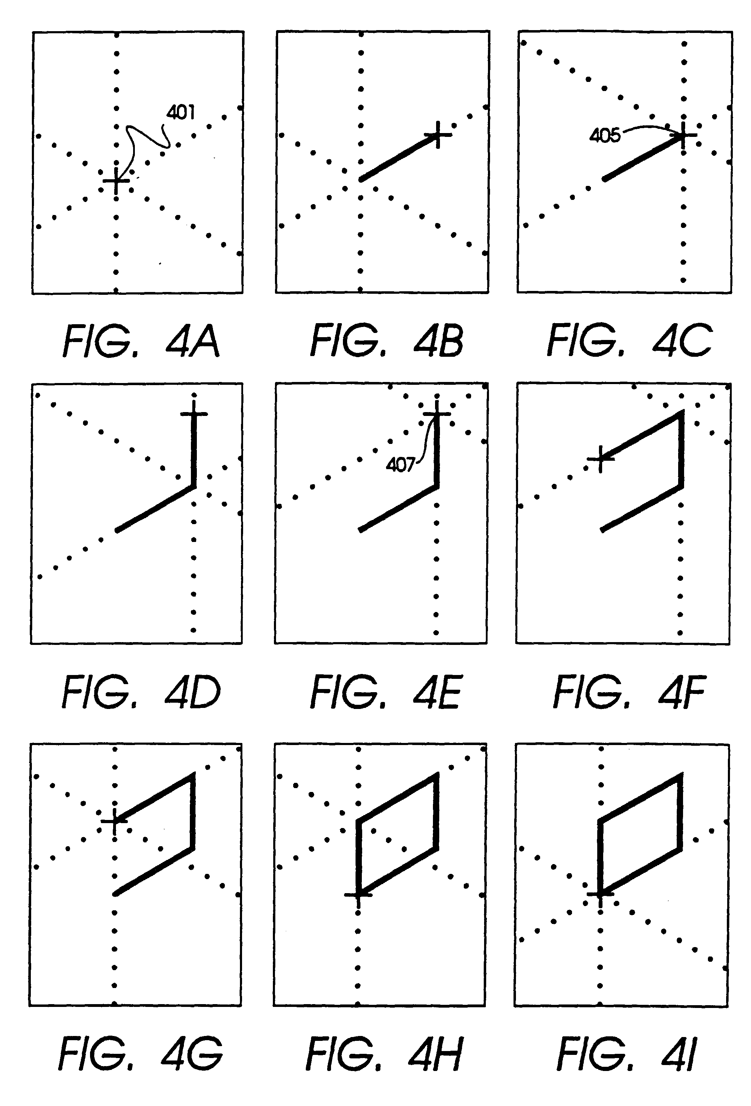

A polar grid is more useful to the artist if the grid's origin is relative to where the artist is drawing, ie. where the user has placed the last control point. This invention extends the idea of moving grids into all four geometries. Figs. 4A-I illustrate the concept of moving grids. In a computer-aided illustration, the construction of objects and the transformations (e.g. stretch, shear, move, and flip) of those objects is accomplished by the placement of control points. When drawing, the user is free to move the hardware cursor 401 to any point on the drawing surface. However, when the user places a control point at point 405 or point 407, the hardware cursor's position is translated into the nearest grid point. In other words, the user's control point is "gridded" to the nearest grid point. This simplifies the construction of objects which must maintain precise linear, angular, paraline, or perspective relationships. Thus as shown in Figs. 4A-I, one could draw a square in paraline geometry in a simple "connect-the-dot" manner.

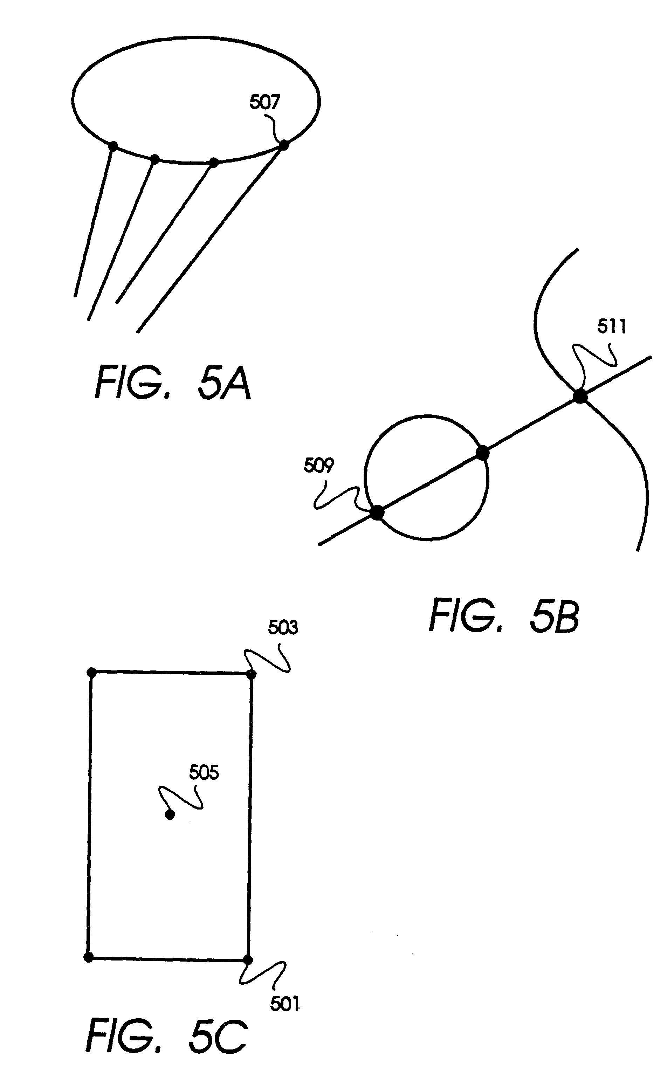

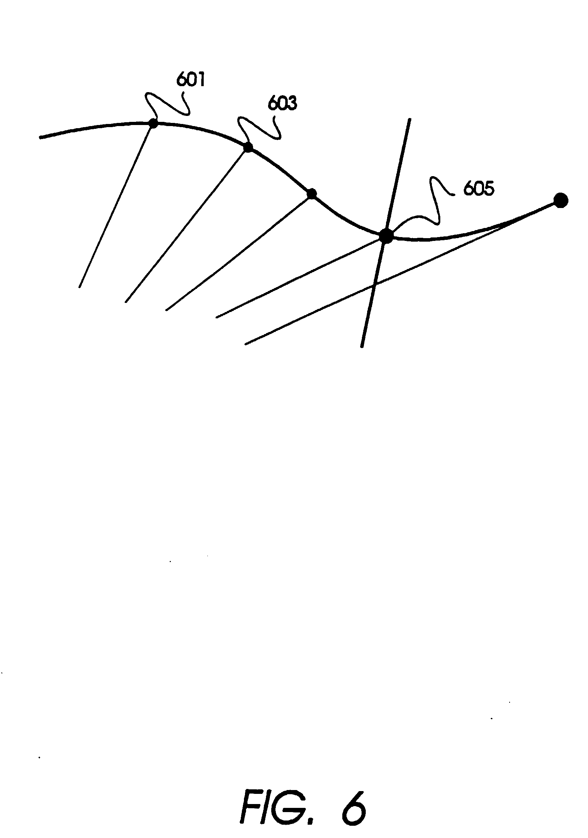

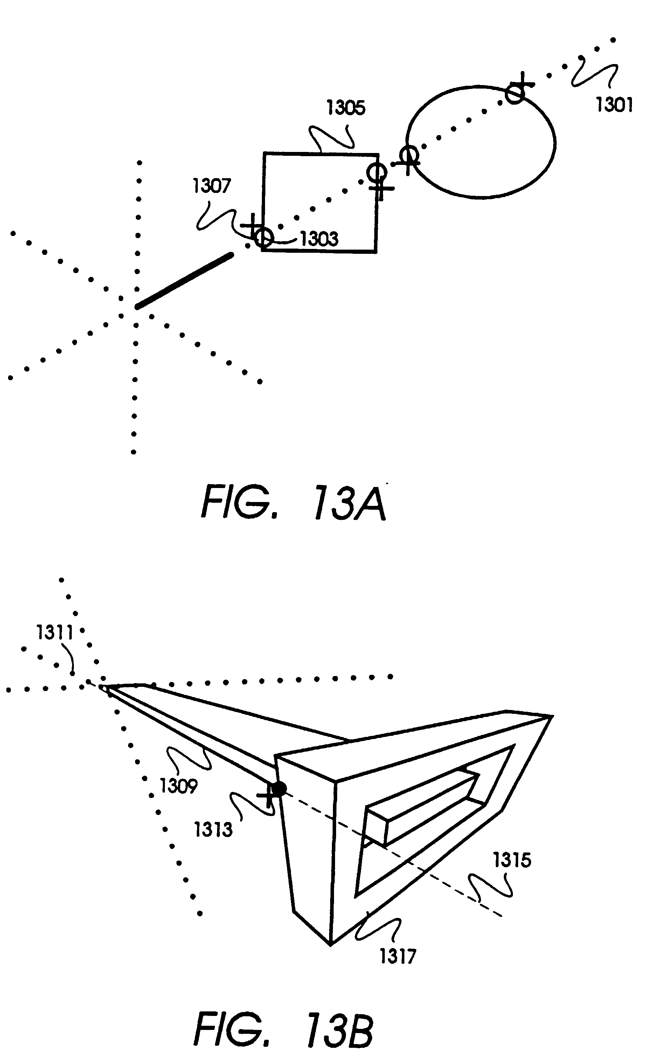

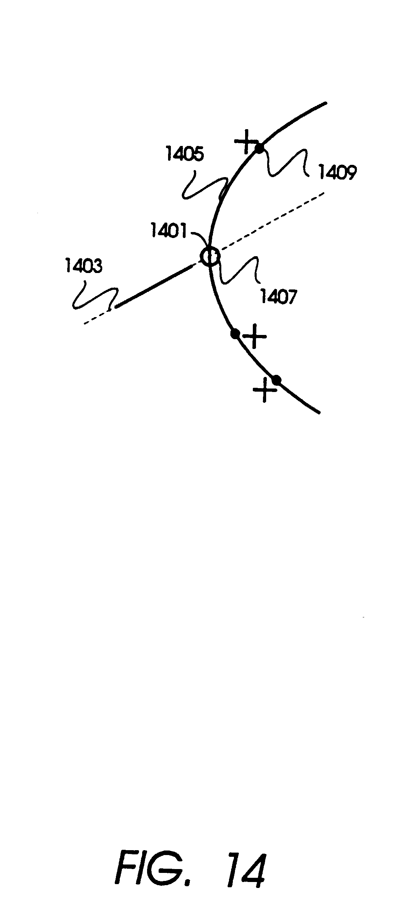

In the preferred embodiment, in addition to gravity at control points 501, 503, 505, objects edges 507, and object intersections 509, 511 (Figs. 5A-C), two new types of intersection gravity are defined. Referring to Fig. 13A, gravity occurs at the intersections 1303, of object 1305 and grid axis 1301. Referring to Fig. 14, gravity also occurs at the intersection 1401 of object 1405 and constraint angles 1403. Certain gravity points such as 1407 have stronger gravitational pull than other gravity points such as 1409. Referring to Fig. 6, the relative gravity strength is conveyed to the user by gravity highlighting on the display. The gravity along an object edge is shown as a small round dot 601, 603, while intersection, frame corner, and vanishing point gravity highlight, for example as a large dot 605. Unlike the grids, gravity will only attract the cursor if it is within a gravity field.

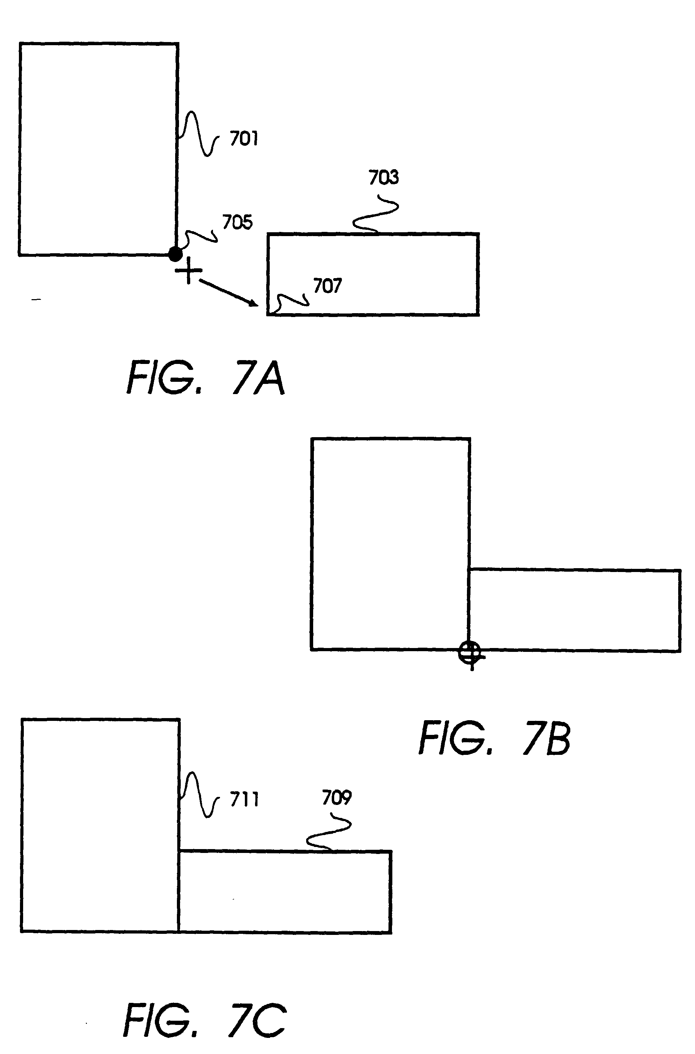

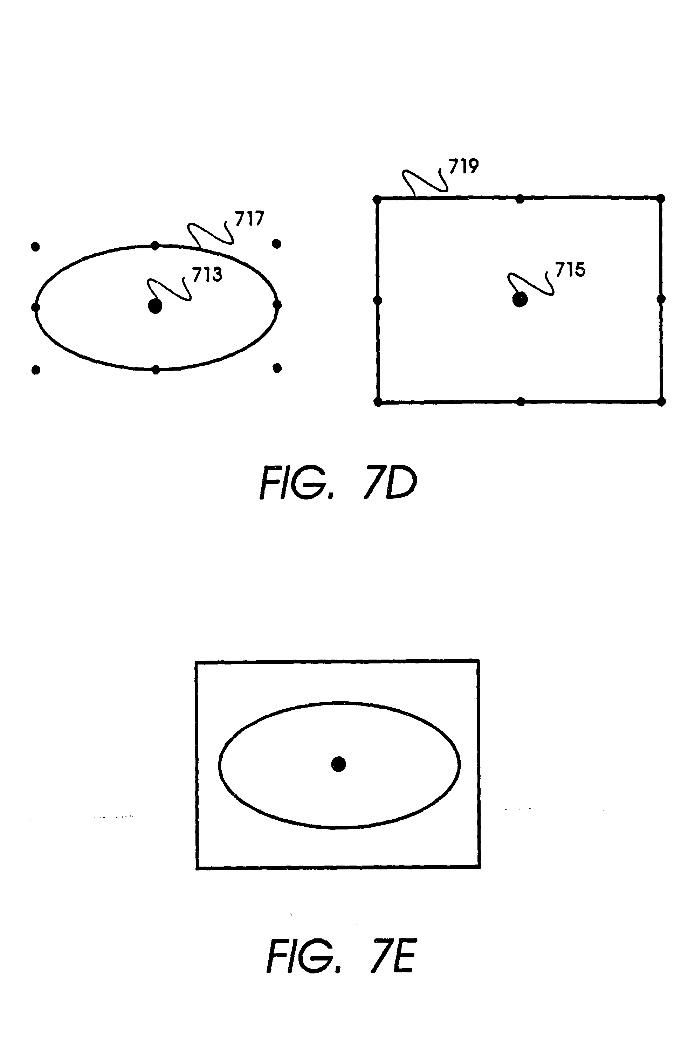

Figs. 7A-E demonstrate the use of gravity. In Fig. 7A, the user chooses to precisely align the edge of one object 701 with that of another object 703. One may do this by snapping onto the corner of the object using control point gravity 705. The user then specifies a "move" transformation and locks onto the corner of the other object 707, again using control point gravity. The completed transformation is seen in Fig. 78. In Fig. 7C, the system redraws the moved object 709 such that it is precisely aligned with the other object 711. Figs. 7D and 7E show how one may also use control point gravity 713, 715 to precisely align the centers of two objects 717, 719.

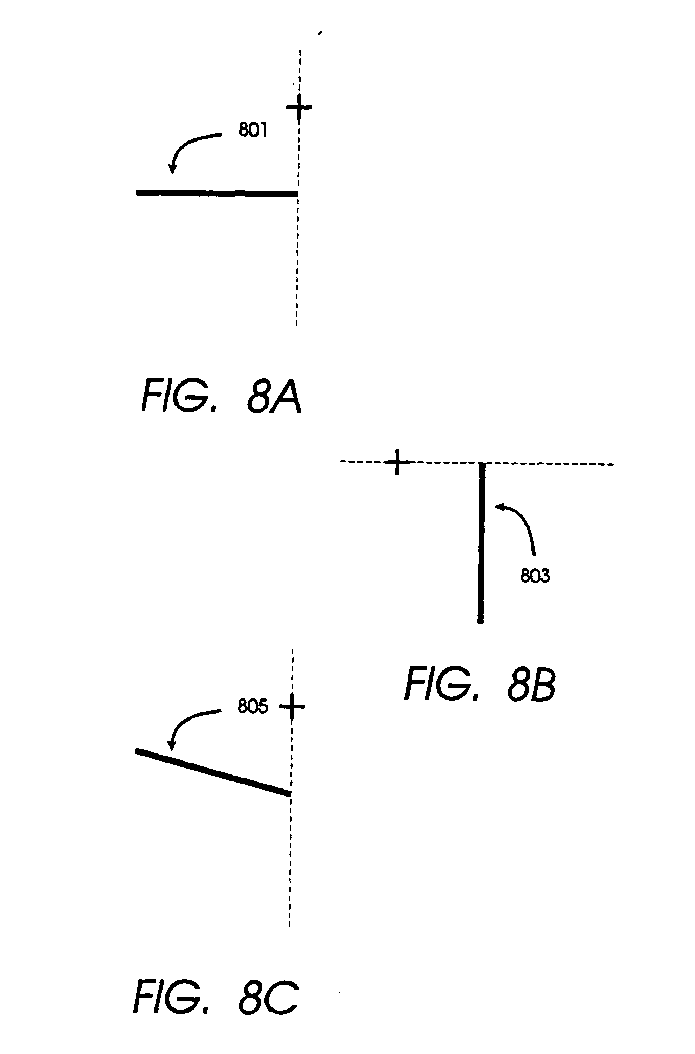

In the preferred embodiment, directional constraints are available in most drawing and editing modes. The different options available are shown in Figs. 8A-C: horizontal constraint 801, vertical constraint 803, and arbitrary, user-specified lock angle constraint 805, or no constraints.

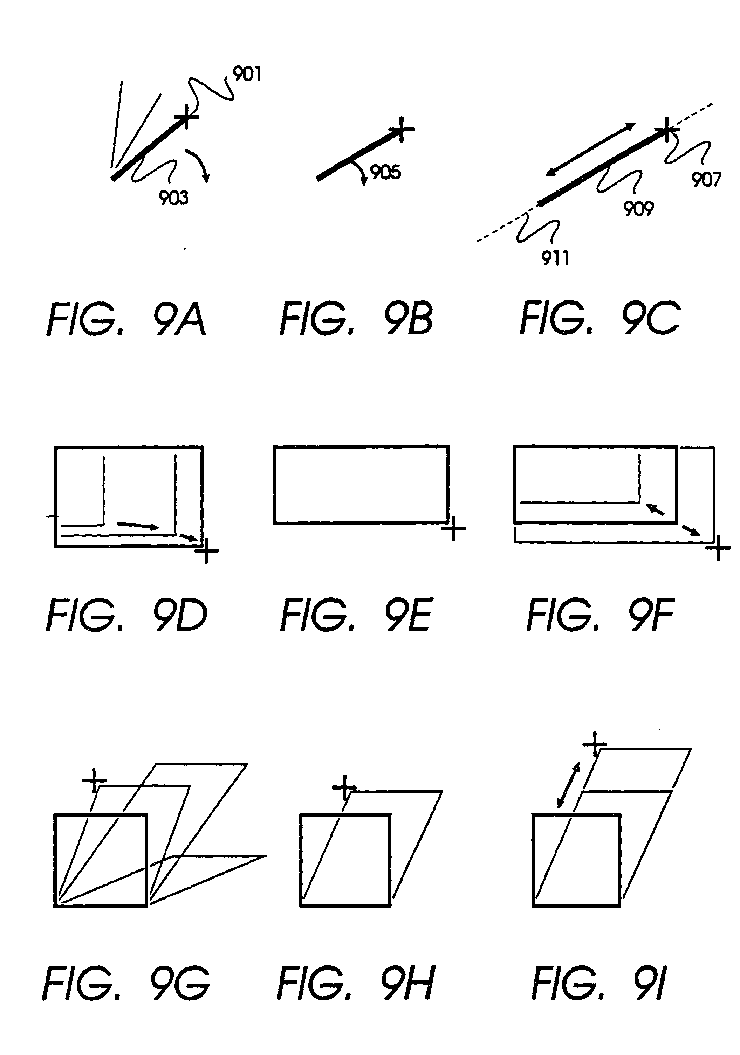

Lock angle provides the user the ability to specify an angle and then have the system lock or constrain the controls points to that angle. The advantages of this are seen in Figs. 9A-I. In Fig. 9A, the user is freely moving the second control point 901 of a line 903 ("rubberbanding"). In Fig. 9B, the user locks an arbitrary angle 905. Fig. 9C displays how the second control point 907 of the line 909 must now lie on the lock angle temporary axis 911. This feature is extended to rectangle drawing in Figs. 9D-F, and to shear transformation in Figs. 9G-I.

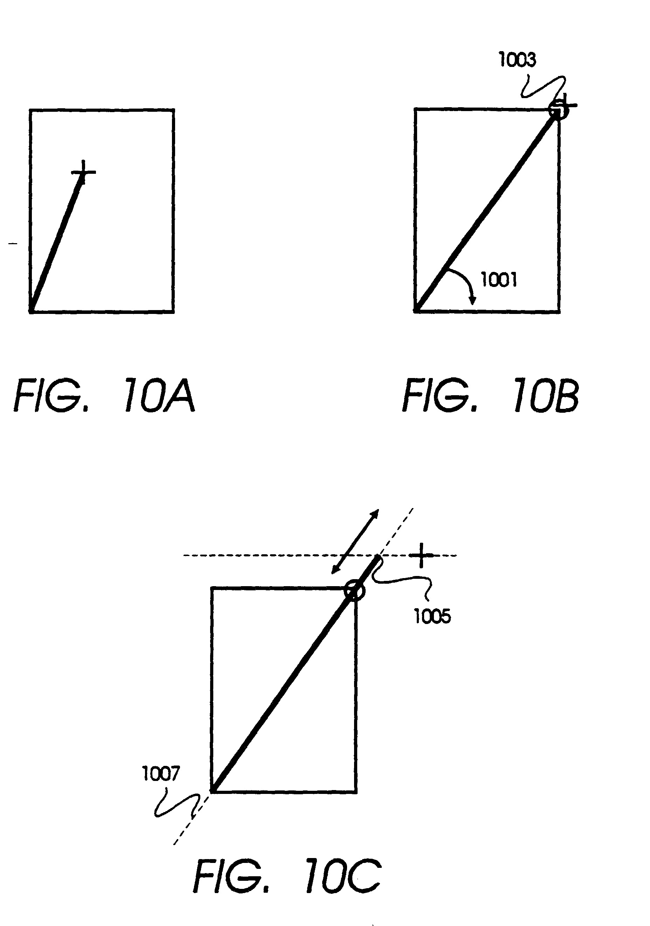

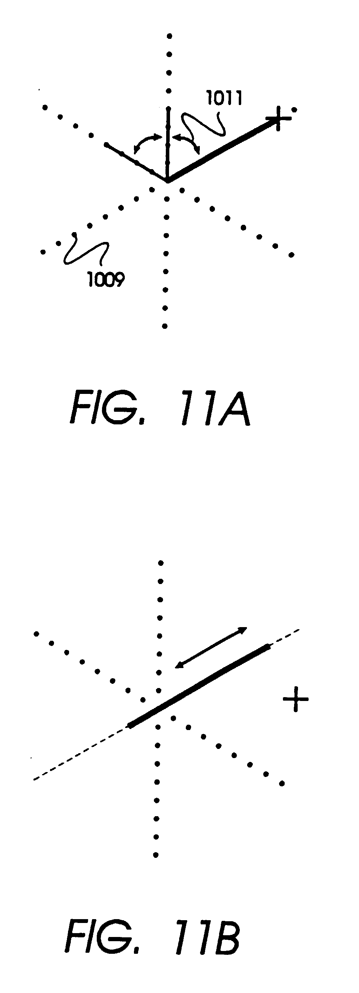

Referring to Figs. 10A-C, the interplay of lock angle with gravity is shown. The user can establish an angle 1001 using gravity at point 1003 and then lock to that angle. Then a subsequent control point 1005 can only be placed using that locked angle. In other words, the control point 1005 must lie on a temporary axis 1007 whose angle to the horizontal axis is equal to the lock angle. In Figs. 11A-B, the underlying geometry 1009 is used to establish a lock angle 1011.

In the preferred embodiment, gravity also combines with geometry and directional constraints to provide another dynamic drawing environment. An object may have different gravity points with different gravitational pull or snap values. Likewise, the polar grids have a certain snap strength. Directional constraints (lock angle, horizontal, or vertical), will supersede gravity and geometry, thereby constraining the placement of control points irrespective of the cursor location on a grid or gravity point.

Referring to Fig. 13 and Fig. 14, the hierarchical relationship of the different forms of gravity and grids is illustrated. For example, in Fig. 13A, the intersection 1303 of a grid line 1301 with an object 1305 has a particular gravity 1307 stronger than either one alone. Likewise, in Fig. 14 the intersection 1401 of a lock angle 1403 and an object 1405 gives rise to a new gravity point 1407 which is stronger than object edge gravity 1409 alone. This interplay is resolved by the following relative strengths (in descending order):
1) control point gravity
2) object intersection gravity
3) object gravity intersected with angle constraint direction
4) fully constrained grid
5) object gravity intersected with partial grid
6) object gravity
7) partial grid

Fig. 13B shows how the combination of geometry and gravity can be used. Line 1309 is drawn by using the perspective grid 1311, and gravitating to the intersection 1313 of the grid line 1315 with the object 1317.

The user may also use horizontal or vertical constraints to create an object whose control points are placed with the help of the interplay of gravity between an object and the geometry, and further constrained along a horizontal or vertical axis.

The preferred embodiment allows one to use the same drawing tools from linear geometry (orthographics) in paraline and perspective geometries. First the user chooses a plane. For example the user could specify to work in the left face of a cube in perspective projection. At this point the user is constrained to work only in the portion of the grid defining the designated plane. In other words, while the hardware cursor may move along any point on the drawing surface, the control points are gridded to the nearest grid point on the selected plane.

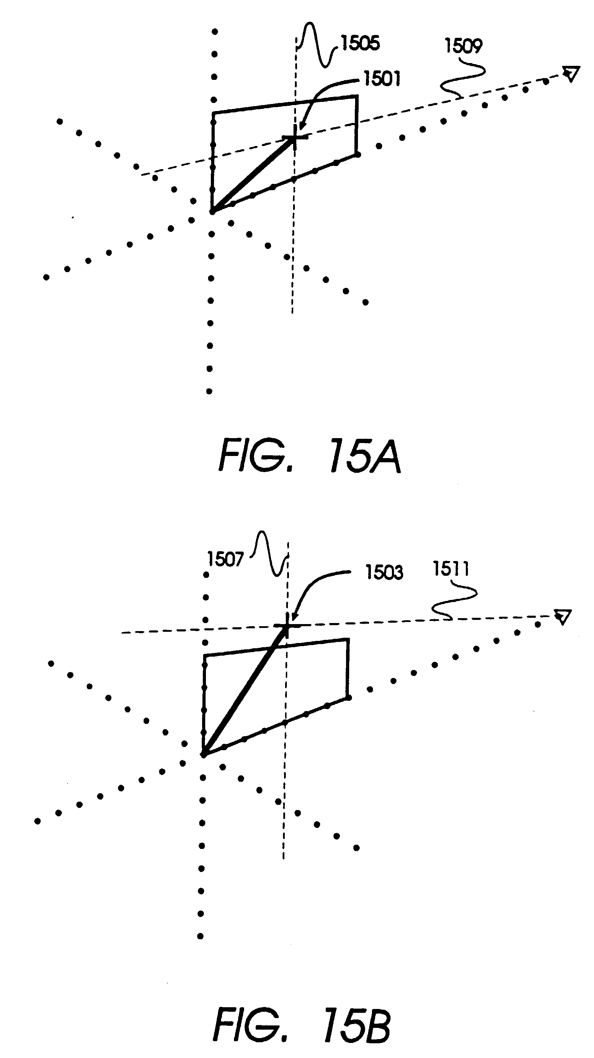

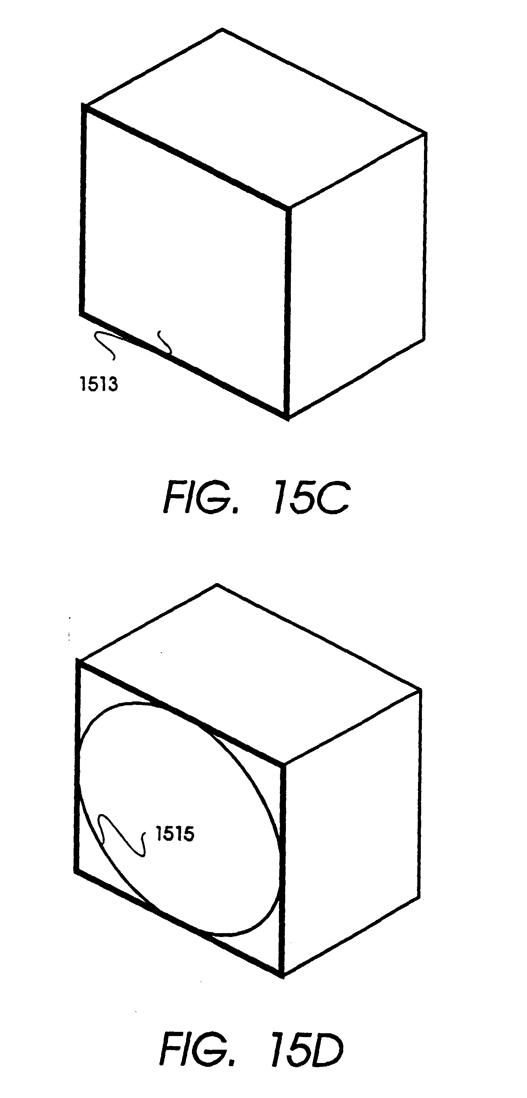

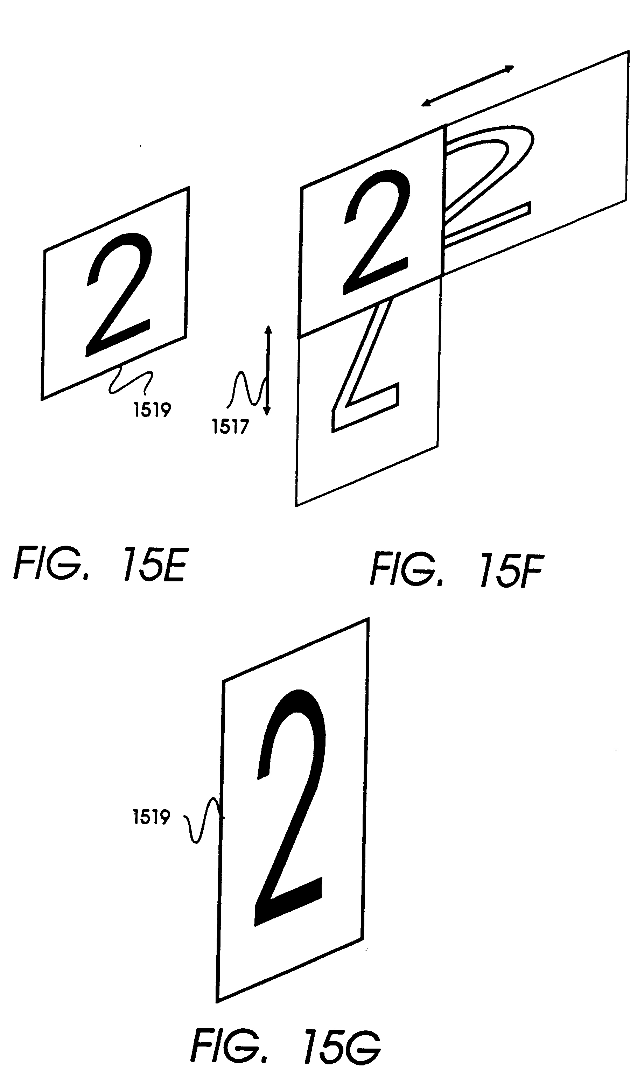

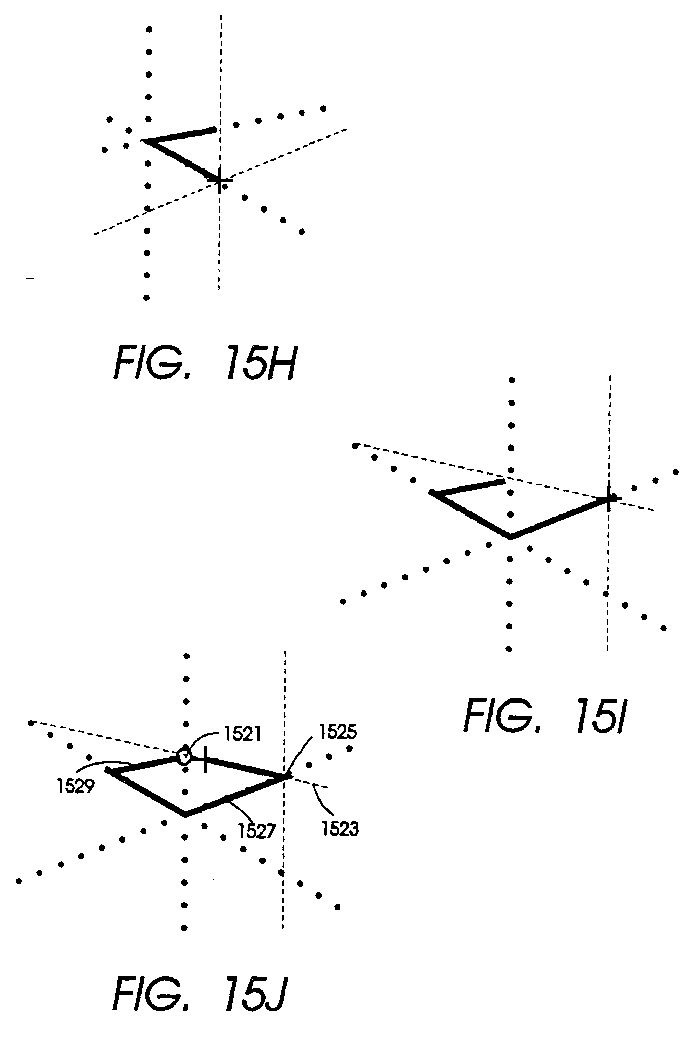

The system provides crosshairs (software cursor) which are displayed and are indicative of the underlying geometry. Figs. 15A-B demonstrate the crosshairs 1501, 1503 that one uses in perspective geometry. Note that the vertical axis 1505, 1507 of the crosshairs 1501, 1503 is fixed (one fixed angle) while the other axis 1509, 1511 is non-fixed (changing angle).

Next the user selects the drawing tool that he or she wishes to use. One may choose, for example, to draw a circle as indicated in Figs. 15C-D. since the control points of the circle are constrained to lie on the user-specified plane 1513 (left face) the circle 1515 itself will also lie on that plane. It should be apparent that the complex task of drawing objects in a projection plane is reduced to the simple task of specifying the plane and choosing the object that one wishes drawn in that plane.

When working in a selected plane, the user still has access to the other features of this embodiment. Thus one might not only be constrained to a particular plane, but further be constrained horizontally and vertically relative to the selected geometry. The directional (horizontal or vertical) constraints may thus be used to control the placement of control points within a particular plane.

Moreover, the user may also perform transformations in a specified plane. Like object drawing, the transformation operations also require the placement of control points. Hence when the system is constrained to one projection plane, any transformation that occurs must occur in that particular plane. Again the user may use the horizontal or vertical constraints to aid in the placement of the control points for the transformation in that specified plane. Figs. 15E-G represent a "stretch" transformation while the user is working in a projection plane 1519 and the system is vertically constrained 1517. The user specifies a vertical constraint 1517, and then completes a stretch transformation 1519. In this embodiment, the transformations which are available are stretch, shear, flip, scale, rotate, and move.

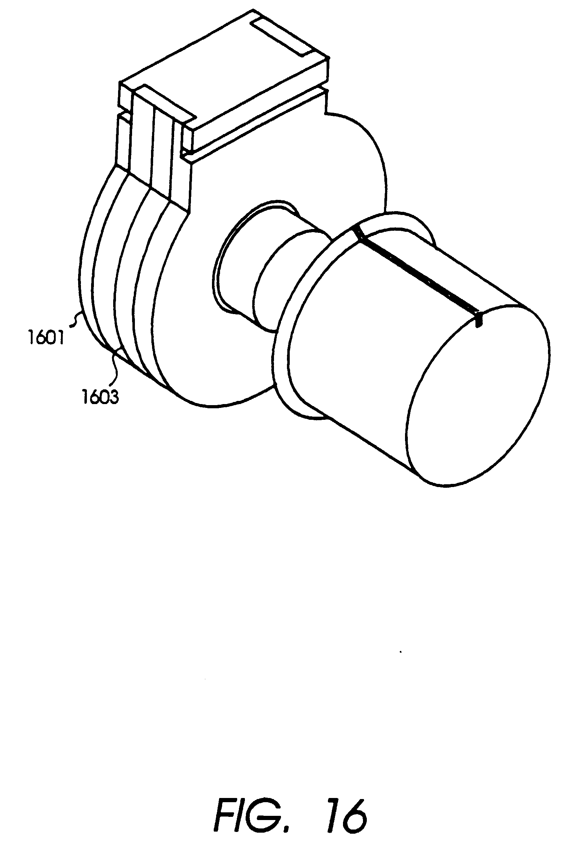

Figs. 15H-J demonstrate that the user may use alignment when working in projection planes. The user may move the hardware cursor to the endpoint of a previously drawn line using gravity field 1521. The alignment line 1523 indicates that the control point 1525 is placed in the user specified projection plane. Thus both lines 1527, 1529 are parallel and aligned in perspective geometry. Hence one may combine these operations to produce complex images, as the isometric ellipses 1601, 1603 in Fig. 16 illustrate.

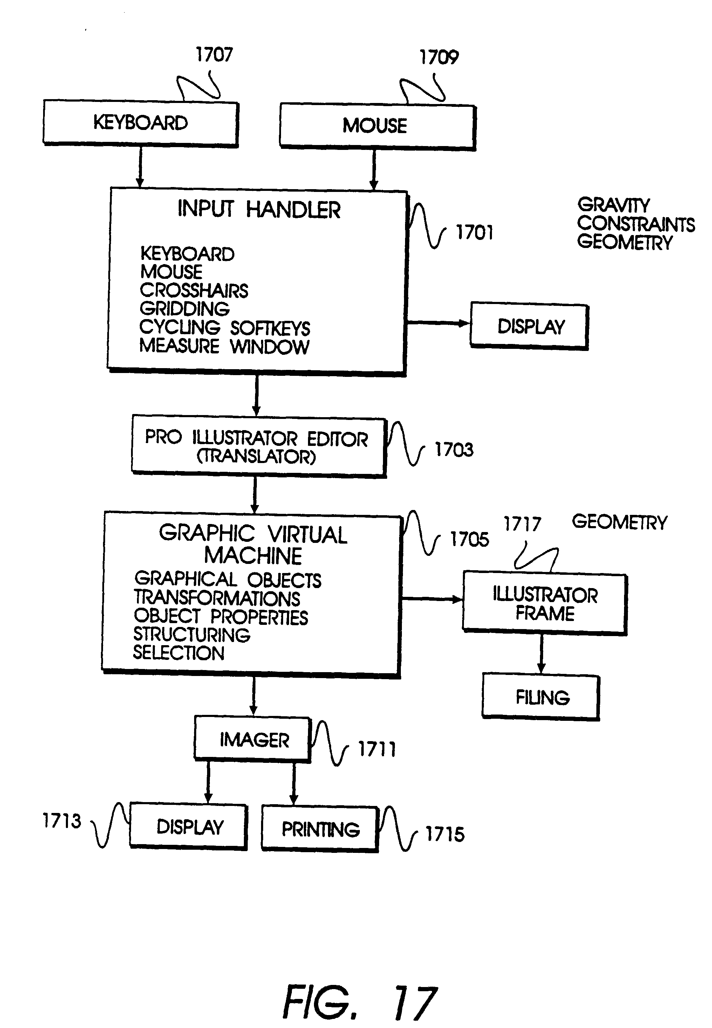

As may be seen in Fig. 17 the program is divided into three basic modules or configurations. These consist of: 1) The Input Handler 1701, 2) the Pro Illustrator Editor 1703, and 3) the Graphic Virtual Machine 1705.

The Input Handler 1701 processes input from either keyboard 1707 or mouse 1709. Its functions are responsible for the cross-hairs, gridding, and cycling soft keys. The Input Handler 1701 may communicate directly with the other modules 1703, 1705. In the alternative the Input Handler may process the input itself and direct the output to the display monitor. Gravity, constraints, and portions of the geometry algorithms are located in the Input Handler.

The next module is the Pro Illustrator Editor 1703. It serves the function of a translator. The Pro Illustrator Editor will take the output from the input handler, locate the appropriate function from the translation table, and then finally call the appropriate function in the Graphic Virtual Machine 1705.

The final module, the Graphic Virtual Machine 1705, serves as the graphic engine for the Pro Illustrator. It contains the functions for the storage of various graphical objects as well as tranformations performed on those objects. The Graphic Virtual Machine, sends its to an imager 1711 which converts the data into an appropriate format for either a printing or display device 1713, 1715. In the alternative, the graphic virtual machine may output to the Illustrator Frame 1717 which is responsible for the storage of object properties. Portions of the geometry algorithms are contained in the Graphic Virtual Machine.

## Claims

1. A method of creating and editing illustrations using a computer-aided drawing system (100) having a display (105) and a cursor-control means (107,109) for positioning a cursor on the display, the method comprising:
creating a line (903) on the display (105), the line defining a lock angle (905,1001,1403) with a reference line;
constraining a control point (901,1003) to lie at a position on the lock angle nearest the cursor; and
extending the line in one direction (911,1007) by using the cursor-control means to select a new end point (907,1005,1401) of the line at the position on the lock angle specified by the control point.

2. The method as claimed in Claim 1, wherein the step of creating a line (903) includes the steps of:
selecting a first end point of the line on the display with the cursor; and
moving the cursor to select a second end point (901) of the line.

3. The method as claimed in Claims 1 or 2, further comprising:
displaying on said display at least one object (1405);
setting a hit radius equal to a particular distance from the cursor; and
if said at least one object intersects the lock angle (1403) within the hit radius of the cursor, constraining the control point (1407) to lie at the intersection (1401).

4. The method as claimed in Claim 3, wherein the object is:
a rectangle on the display, wherein two vertices of the rectangle define the lock angle with the reference line; and
extending the rectangle by using the cursor-control means to select a new vertex of the rectangle at the position on the lock angle specified by the control point.

5. The method as claimed in Claim 4, wherein the step of creating a rectangle includes:
selecting a first vertex of the rectangle on the display with the cursor; and
moving the cursor to select a second nonadjacent vertex of the rectangle.

6. The method as claimed in Claim 4, wherein the two vertices of the rectangle are not adjacent so that the rectangle is extended while retaining the aspect ratio of the sides of the rectangle.

7. The method as claimed in Claim 4, wherein the two vertices of the rectangle are adjacent so that the rectangle is extended by a shear transformation.

8. The method as claimed in any of the preceding claims, wherein the reference line is a horizontal line that is not displayed on the display.

9. A computer-aided drawing system (100) comprising:
a computer having a memory (103) and a processor (101);
a display (105) coupled to the computer;
a cursor-control means (107,109) coupled to the computer for moving a cursor on the display device;
means for creating a line (903) on the display, the line defining a lock angle (905) with a reference line;
means for constraining a control point (901) to lie at a position on the lock angle nearest the cursor; and
means for extending the line in one direction by using the cursor-control means to select a new end point of the line at the position on the lock angle specified by the control point (907).

10. The computer-aided drawing system as claimed in Claim 9, further comprising:
means for creating a rectangle on the display, wherein two vertices of the rectangle define the lock angle with the reference line; and
extending the rectangle by using the cursor-control means to select a new vertex of the rectangle at the position on the lock angle specified by the control point.

## Patentansprüche

1. Verfahren zum Kreieren und Editieren von Darstellungen, das ein computerunterstütztes Zeichensystem (100) verwendet, das eine Anzeige (105) und eine Cursor-Steuereinrichtung (107, 109) zum Positionieren eines Cursors auf der Anzeige besitzt, wobei das Verfahren aufweist:
Erzeugen einer Linie (903) auf der Anzeige (105), wobei die Linie einen Verriegelungswinkel (905, 1001, 1403) mit einer Referenzlinie definiert;
Einschränken eines Kontrollpunkts (901, 1003) so, daß er an einer Position auf dem Verriegelungswinkel am nahesten zu dem Cursor liegt; und
Verlängern der Linie in einer Richtung (911, 1007) unter Verwendung der Cursor-Steuereinrichtung, um einen neuen Endpunkt (907, 1005, 1401) der Linie an der Position auf dem Verriegelungswinkel, der durch den Kontrollpunkt spezifiziert ist, auszuwählen.

2. Verfahren nach Anspruch 1, wobei der Schritt eines Erzeugens einer Linie (903) die Schritte umfaßt:
Auswählen eines ersten Endpunkts der Linie auf der Anzeige mit dem Cursor; und
Bewegen des Cursors so, um einen zweiten Endpunkt (901) der Linie auszuwählen.

3. Verfahren nach Anspruch 1 oder 2, das weiterhin aufweist:
Anzeigen auf der Anzeige mindestens ein Objekt (1405);
Einstellen eines zutreffenden Radius gleich zu einem bestimmten Abstand von dem Cursor; und,
wenn das mindestens eine Objekt den Verriegelungswinkel (1403) innerhalb des zutreffenden Radius des Cursors schneidet, Einschränken des Kontrollpunkts (1407) so, daß er auf dem Schnittpunkt (1401) liegt.

4. Verfahren nach Anspruch 3, wobei das Objekt ist:
ein Rechteck auf der Anzeige, wobei zwei Scheitelpunkte des Rechtecks den Verriegelungswinkel mit der Referenzlinie definieren; und
Verlängern des Rechtecks unter Verwendung der Cursor-Kontrolleinrichtung, um einen neuen Scheitelpunkt des Rechtecks an der Position auf dem Verriegelungswinkel, der durch den Kontrollpunkt spezifiziert ist, auszuwählen.

5. Verfahren nach Anspruch 4, wobei der Schritt eines Erzeugens eines Rechtecks umfaßt:
Auswählen eines ersten Scheitelpunkts des Rechtecks auf der Anzeige mit dem Cursor; und
Bewegen des Cursors so, um einen zweiten, nicht angrenzenden Scheitelpunkt des Rechtecks auszuwählen.

6. Verfahren nach Anspruch 4, wobei die zwei Scheitelpunkte des Rechtecks nicht so angrenzend sind, daß das Rechteck verlängert wird, während das Längenverhältnis der Seiten des Rechtecks beibehalten wird.

7. Verfahren nach Anspruch 4, wobei die zwei Scheitelpunkte des Rechtecks so angrenzend sind, daß das Rechteck durch eine Schertransformation verlängert wird.

8. Verfahren nach einem der vorhergehenden Ansprüche, wobei die Referenzlinie eine horizontale Linie ist, die nicht auf der Anzeige angezeigt wird.

9. Computerunterstütztes Zeichensystem (100), das aufweist:
einen Computer, der einen Speicher (103) und einen Prozessor (101) umfaßt;
eine Anzeige (105), die mit dem Computer gekoppelt ist;
eine Cursor-Kontrolleinrichtung (107, 109), die mit dem Computer zum Bewegen eines Cusors auf der Anzeigevorrichtung gekoppelt ist;
eine Einrichtung zum Erzeugen einer Linie (903) auf der Anzeige, wobei die Linie einen Verriegelungswinkel (905) mit einer Referenzlinie definiert;
eine Einrichtung zum Einschränken eines Kontrollpunkts (901) so, daß er an einer Position auf dem Verriegelungswinkel am nahesten zu dem Cursor liegt; und
eine Einrichtung zum Verlängern der Linie in einer Richtung unter Verwendung der Cursor-Kontrolleinrichtung, um einen neuen Endpunkt der Linie an der Position auf dem Verriegelungswinkel auszuwählen, der durch den Kontrollpunkt (907) spezifiziert ist.

10. Computerunterstütztes Zeichensystem nach Anspruch 9, das weiterhin aufweist:
eine Einrichtung zum Erzeugen eines Rechtecks auf der Anzeige, wobei zwei Scheitelpunkte des Rechtecks den Verriegelungswinkel mit der Referenzlinie definieren; und
Verlängern des Rechtecks unter Verwendung der Cursor-Kontrolleinrichtung, um einen neuen Scheitelpunkt des Rechtecks an der Position auf dem Verriegelungswinkel, der durch den Kontrollpunkt spezifiziert ist, auszuwählen.

## Revendications

1. Procédé pour créer et modifier des illustrations à l'aide d'un système (100) de dessin assisté par ordinateur ayant un dispositif d'affichage (105) et un moyen (107,109) de commande par curseur pour positionner un curseur sur le dispositif d'affichage, le procédé consistant :
à créer une ligne (903) sur l'affichage (905), la ligne définissant un angle (905,1001,1403) de verrouillage avec une ligne de référence ;
à contraindre un point de contrôle (901,1003) de se situer à la position la plus proche du curseur sur l'angle de verrouillage; et
à prolonger la droite dans une direction (911,1007) en utilisant le moyen de commande par curseur pour sélectionner un nouveau point d'extrémité (907,1005,1401) de la ligne, à la position qui est spécifiée par le point de contrôle sur l'angle de verrouillage.

2. Procédé selon la revendication 1, dans lequel l'étape qui consiste à créer une ligne (903) comprend les étapes qui consistent :
à sélectionner un premier point d'extrémité de la ligne sur le dispositif d'affichage à l'aide du curseur ; et
à déplacer le curseur de façon à sélectionner un second point d'extrémité (901) de la ligne.

3. Procédé selon la revendication 1 ou 2, consistant en outre :
à afficher sur ledit affichage au moins un objet (1405) ;
à fixer un rayon d'action égal à une distance particulière au curseur ; et
si ledit au moins un objet coupe l'angle (1043) de verrouillage à une distance inférieure au rayon d'action du curseur,
à contraindre le point (1407) de contrôle de se situer à l'intersection (1401).

4. Procédé selon la revendication 3, dans lequel l'objet est :
un rectangle sur l'affichage, deux angles du rectangle définissant l'angle de verrouillage avec la ligne de référence ; et
dans lequel on étend le rectangle obtenu en utilisant le moyen de commande par curseur pour sélectionner un nouvel angle du rectangle se situant à la position qui est spécifiée par le point de contrôle sur l'angle de verrouillage.

5. Procédé selon la revendication 4, dans lequel l'étape qui consiste à créer un rectangle comprend :
la sélection d'un premier angle du rectangle sur le dispositif d'affichage à l'aide du curseur ; et
le déplacement du curseur pour sélectionner un deuxième angle non adjacent du rectangle.

6. Procédé selon la revendication 4, dans lequel les deux angles du rectangle ne sont pas adjacents, de sorte qu'on prolonge le rectangle tout en conservant le rapport de dimensions des côtés du rectangle.

7. Procédé selon la revendication 4, dans lequel les deux angles du rectangle sont adjacents, de sorte qu'on prolonge le rectangle par transformation par déformation horizontale.

8. Procédé selon l'une quelconque des revendications précédentes, dans lequel la ligne de référence est une ligne horizontale qui n'est pas affichée sur le dispositif d'affichage.

9. Système (100) de dessin assisté par ordinateur, comprenant :
un ordinateur ayant une mémoire (103) et un processeur (101) ;
un dispositif (105) d'affichage relié à l'ordinateur ;
un moyen (107,109) de commande par curseur relié à l'ordinateur pour déplacer un curseur sur le dispositif d'affichage ;
un moyen pour créer une ligne (903) sur le dispositif d'affichage, la ligne définissant un angle (905) de verrouillage par rapport à une ligne de référence ;
un moyen pour contraindre un point (901) de contrôle à se situer à la position la plus proche du curseur sur l'angle de verrouillage ; et
un moyen pour prolonger la ligne dans une direction en utilisant le moyen de commande par curseur pour sélectionner un nouveau point d'extrémité de la ligne, en une position spécifiée par le point (907) de contrôle sur l'angle de verrouillage.

10. Système de dessin assisté par ordinateur selon la revendication 9, comprenant en outre :
un moyen pour créer un rectangle sur le dispositif d'affichage, deux angles du rectangle définissant l'angle de verrouillage par rapport à la droite de référence ; et
le fait qu'on prolonge le rectangle en utilisant le moyen de commande par curseur pour sélectionner un nouvel angle du rectangle en une position spécifiée par le point de contrôle sur l'angle de verrouillage.
